**Europäisches Patentamt**

**European Patent Office**

**Office européen des brevets**

(11) Veröffentlichungsnummer: **0 187 313**
**A2**

# EUROPÄISCHE PATENTANMELDUNG

(21) Anmeldenummer: **85115971.5**

(22) Anmeldetag: **13.12.85**

(51) Int. Cl.4: **C08L 67/02 , C08L 51/04**

(30) Priorität: **19.12.84 DE 3446225**

(43) Veröffentlichungstag der Anmeldung:
**16.07.86 Patentblatt 86/29**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Heinz, Gerhard, Dr.**
**Im Vogelsang 2**
**D-6719 Weisenheim(DE)**
Erfinder: **McKee, Graham Edmund, Dr.**
**Kastanienweg 8**
**D-6940 Weinheim(DE)**
Erfinder: **Simon, Georg Nikolaus, Dr.**
**Untere Hart 10**
**D-6703 Limburgerhof(DE)**
Erfinder: **Kleber, Friedrich**
**Hermann-Hesse-Strasse 5**
**D-6520 Worms 25(DE)**
Erfinder: **Knoll, Manfred**
**Pfrimmstrasse 1**
**D-6521 Wachenheim(DE)**

(54) **Schlagzähe, thermoplastische Polyesterformmassen.**

(57) Schlagzähe thermoplastische Polyesterformmassen, dadurch gekennzeichnet, daß sie durch inniges Mischen von

A. 52 bis 99 Gewichtsteile einer Schmelze mindestens eines Polyalkylenterephthalats mit

B. 1 bis 48 Gewichtsteilen mindestens eines durch Emulsionspolymerisation hergestellten kautschukelastischen Pfropfpolymerisats aufgebaut aus

1. 70 bis 90 Gew.% einer Pfropfgrundlage aus kautschukelastischen Polymeren mit einem Gelgehalt von mindestens 80 % und einer Glastemperatur Tg von kleiner -20°C und

2. 10 bis 30 Gew.% einer Pfropfhülle aus mindestens einem Polymeren mit einer Glastemperatur Tg von größer 40°C

in Form einer wäßrigen Dispersion, in der das Pfropfpolymerisat B zu mindestens 80 % in einer Teilchengröße von 0,05 bis 0,15 μm vorliegt, unter gleichzeitigem Entfernen des dabei verdampfenden Wassers hergestellt worden sind.

## Schlagzähe, thermoplastische Polyesterformmassen

Es ist bekannt, die Schlagzähigkeit von thermoplastischen Polyestern dadurch zu verbessern, daß man kautschukelastische Polymerisate zumischt. Aus der DE-OS 16 94 173 sind Polyesterformmassen bekannt, die einen Polybutadienkautschuk, der mit Styrol gepfropft ist, enthalten. Ferner ist aus der DE-PS 23 48 377 zu entnehmen, daß sich Pfropfpolymerisate auf Basis Polybutadien mit einer Pfropfhülle aus Styrol/Methacrylsäuremethlyester, die vernetzt sind, zur Erhöhung der Schlagzähigkeit von Polyestern geeignet sind. Schließlich ist der EP-Anmeldung 22 216 zu entnehmen, daß sich Polybutadienkautschuke, die vernetzt sind und zusätzlich mit Styrol/Acrylnitril gepfropft sind, als zähmachende Zusätze zu Polyestern eignen. In der EP-PS 56 123 wird auch bereits beschrieben, daß man Pfropfkautschuk der gefällt und mechanisch auf einen bestimmten Wassergehalt entwässert wurde, einer Polyesterschmelze zugemischt wird, um die Schlagzähigkeit zu verbessern. Die bekannten schlagzähen Polyesterformmassen haben jedoch den Nachteil, daß ihre Schlagzähigkeit bei tiefen Temperaturen zu wünschen übrig läßt.

Es war deshalb die technische Aufgabe gestellt, - schlagzähe Polyesterformmassen zur Verfügung zu stellen, die sich durch eine verbesserte Schlagzähigkeit bei tiefen Temperaturen auszeichnen und zudem eine verbesserte Fließfähigkeit und Oberflächengüte aufweisen.

Diese Aufgabe wird gelöst durch schlagzähe thermoplastische Polyesterformmassen, die durch inniges Mischen von

A. 52 bis 99 Gewichtsteilen einer Schmelze mindestens eines Polyalkylenterephthalats mit

B. 1 bis 48 Gewichtsteilen mindestens eines durch Emulsionspolymerisation hergestellten Kautschukelastischen Pfropfpolymerisates aufgebaut aus

1. 70 bis 90 Gew.% einer Pfropfgrundlage aus einem Polymeren mit einem Gelgehalt von mindestens 80 % und einer Glastemperatur Tg von kleiner -20°C und

2. 10 bis 30 Gew.% einer Pfropfhülle aus mindestens einem Polymeren mit einer Glastemperatur Tg von größer 40°C

in Form einer wäßrigen Dispersion, in der das Pfropfpolymerisat B zu mindestens 80 % in einer Teilchengröße von 0,05 bis 0,15 µm vorliegt unter gleichzeitigem Entfernen des dabei verdampfenden Wassers hergestellt worden sind.

Die erfindungsgemäßen Polyesterformmassen zeichnen sich durch eine verbesserte Schlagzähigkeit bei tiefen Temperaturen aus. Darüber hinaus haben die neuen Polyesterformmassen den Vorteil, daß sie eine verbesserte Fließfähigkeit und Oberflächengüte aufweisen.

Die als Komponente A verwendeten Polyalkylenterephthalate haben vorteilhaft eine Viskositätszahl von 80 bis 170, insbesondere 110 bis 150, gemessen als 0,5 gewichtsprozentige Lösung in Phenol/o-Dichlorbenzol (1:1) bei 25°C. Bevorzugte Polyalkylenterephthalate leiten sich von Alkandiolen mit 2 bis 6 Kohlenstoffatomen ab. Die Polyester können bis zu 10 Mol.% Anteile, die sich von anderen Dicarbonsäuren, wie Isophthalsäure, Alkandicarbonsäuren mit 6 bis 36 Kohlenstoffatomen, Naphthalindicarbonsäuren, halogenierten aromatischen Dicarbonsäuren ableiten oder auch verzweigte Alkandiole, wie Neopentylglykol, 1 oder 2 Methylbutandiol-1,4, 2-Ethylhexandiol-1,6, Dimethylbutandiol, enthalten. Darüber hinaus können die verwendeten Polyester auch bis zu 1 Mol.% drei- oder höherwertige Polycarbonsäuren oder Polyole, wie Pyromelitsäure, Trimellitsäure, Trimethylolpropan oder Pentaerythrit enthalten.

Besondere technische Bedeutung haben Polyethylenrephthalat und Polybutylenterephthalat oder deren Gemische erlangt.

Die erfindungsgemäßen Formmassen enthalten als Komponente A 52 bis 99 Gewichtsteile, insbesondere 70 bis 85 Gewichtsteile mindestens eines Polyalkylenterephthalats.

Als Komponente B enthalten die erfindungsgemäßen thermoplastischen Polyesterformmassen 1 bis 48, insbesondere 15 bis 30 Gewichtsteile mindestens eines durch Emulsionspolymerisation hergestellten kautschukelastischen Pfropfpolymerisats. Es versteht sich, daß die Summe von A und B 100 Gewichtsteile beträgt.

Derartige kautschukartige Pfropfpolymerisate sind an sich bekannt. Sie sind aufgebaut aus

1. 70 bis 90 Gew.%, insbesondere 75 bis 85 Gew.% einer Pfropfgrundlage aus einem kautschukelastischen Polymeren mit einem Gelgehalt von mindestens 80 % und einer Glastemperatur Tg von kleiner -20°C. Geeignete Pfropfgrundlagen werden z.B. hergestellt durch Emulsionspolymerisation von Butadien, Isopren, Estern der (Meth)acrylsäure mit Alkanolen mit 2 bis 6 Kohlenstoffatomen.

2. 10 bis 30 Gew.%, insbesondere 19 bis 25 Gew.% einer Pfropfhülle aus mindestens einem Polymeren mit einer Glastemperatur Tg von größer 40°C. Besonders bewährt haben sich als Pfropfmonomere Styrol, Styrol/Acrylnitril oder Methylmethacrylat. Zusätzlich können die Pfropfhülle haftungsvermittelnde Gruppen enthalten, die durch Mitverwendung von Glycidyl(meth)acrylat eingebracht werden. Vorteilhaft sind auch Pfropfpolymerisate, die eine aus mehreren Schalen aufgebaute Pfropfhülle besitzen, wobei die äußere Schale aus Methylacrylsäuremethylester und gegebenenfalls Glycidylmethacrylat aufgebaut ist.

Besonders bewährt haben sich Pfropfkautschuke, die aufgebaut sind aus einer Pfropfgrundlage, die zu mindestens 90 % aus Butadien besteht und mit einer Mischung aus Styrol/Acrylnitril im Gewichtsverhältnis 3,5 zu 0,5 bis 2,5 zu 1,5 oder mit Methylmethacrylat gepfropft ist.

Die durch Emulsionspolymerisation erhaltene wäßrige Dispersion des Pfropfpolymerisats (Komponente B) hat in der Regel einen Feststoffgehalt von 35 bis 60, insbesondere 45 bis 55 Gew.%. In dieser wäßrigen Dispersion liegt das Pfropfpolymerisat B zu mindestens 80 % in einer Teilchengröße von 0,05 bis 0,15 µm vor.

Darüber hinaus enthalten die erfindungsgemäßen Formmassen gegebenenfalls Hilfsstoffe, wie Antioxidantien, Stabilisatoren und Verstärkungsmitteln in wirksamen Mengen.

Die erfindungsgemäßen Formmassen werden hergestellt, indem man eine Schmelze des als Komponente A verwendeten Polyalkylenterephthalats mit einer wäßrigen Dispersion der Komponente B innig mischt und dabei gleichzeitig das dabei verdampfende Wasser entfernt. Vorteilhaft verfährt man so, daß man zunächst in einem Extruder im Polyester A plastifiziert und über im Verlauf des Extruders angeordnete Zugabeöffnungen die Pfropfkautschukdispersion zugibt, mit der Polymerisatschmelze innig vermischt und über eine Entgasungsöffnung Wasser und flüchtige Anteile entfernt. Die Masse wird anschließend ausgepreßt, gekühlt und zerkleinert. Die Mischtemperaturen tragen in der Regel 200 bis 270°C.

Vorteilhaft enthalten erfindungsgemäße Formmassen 10 bis 100, insbesondere 10 bis 50 Gewichtsteile Glasfasern, bezogen auf 100 Gewichtsteile der Mischung aus den Komponenten A und B. Die in der Formmasse vorliegenden Glasfasern haben im allgemeinen eine Länge von 0,1 bis 0,5 mm, vorzugsweise von 0,15 bis 0,30 mm und einen Durchmesser von etwa 6 bis 20 μm, vorzugsweise 10 bis 14 μm. Besonders bevorzugt sind Glasfasern aus E-Glas. Um eine bessere Haftung zu erzielen, sind die Glasfasern vorteilhaft mit Organosilanen wie Amioalkylsilanen, insbesondere Aminoalkyltrialkoxysilanen wie γ-Aminopropyltriethoxysilan beschichtet.

Die erfindungsgemäßen Formmassen eignen sich zur Herstellung von Formteilen durch Spritzgießen.

Der Gegenstand der Erfindung sei an folgenden Beispielen veranschaulicht.

Beispiel 1

Eine Dispersion aus Polybutadien wurde mit einem Gemisch aus Styrol/Acrylnitril (Gewichtsverhältnis 3:1) bei 70°C gepfropft. Die Pfropfhülle aus Styrol/Acrylnitril entspricht 20 Gew.% des Pfropfkautschuks. Der Gelgehalt der Pfropfgrundlage beträgt 98 %. Die erhaltene Dispersion hatte einen Feststoffgehalt von 45,5 Gew.%. Der Pfropfkautschuk hatte zu 80 % eine Teilchengröße von 0,15 μm. In einem Zweiwellenextruder wurden 80 Gewichtsteile Polybutylenterephthalat plastifiziert und im Verlauf des Extruders über eine Zugabeöffnung der Schmelze bei 240°C 20 Gewichtsteile des oben genannten Pfropfkautschuks, berechnet als Feststoff in Form einer 45,5 gewichtsprozentigen Dispersion zugegeben. Das verdampfende Wasser wurde entfernt und die erhaltene Masse gestrangt und zerkleinert.

Aus dieser Formmasse wurden bei 260°C Schmelzetemperatur Kleinnormstäbe spritzgegossen und die Kerbschlagzähigkeit nach DIN 53 453 bestimmt.

Die Fließfähigkeit wurde nach der Fließlänge der Schmelze in einer Spirale mit einem stetig bis auf 175 mm wachsenden Durchmesser und einem Querschnitt von 2 x 10 mm, bei einem konstanten Spritzdruck von 92 bar einer Formtemperatur von 60°C, einer Schmelzetemperatur von 260°C bestimmt. Die erhaltenen Werte geben die Länge des Fließweges in cm wieder. Die erhaltenen Ergebnisse sind aus Tabelle 1 zu entnehmen.

Vergleichsbeispiel 1

Man verfährt wie in Beispiel 1 beschrieben, verwendet jedoch eine Pfropfkautschukdispersion, in der 50 % der Teilchen eine Größe von 0,3 μm haben. Die Werte des so erhaltenen Polybutylenformmasse mit einem Gehalt an 20 Gew.% Pfropfkautschuk sind aus Tabelle 1 zu entnehmen.

Vergleichsbeispiel 2

Man verfährt wie in Vergleichsbeispiel 1 beschrieben, fällt jedoch den Kautschuk durch Zugabe einer 10 gew.%igen Magnesiumsulfatlösung bei 70°C aus. Das Pfropfpolymerisat wird auf einer Nutsche filtriert und mit Wasser gründlich gespült. Die gut abgesaugte krümmelige Masse wurde bei 60°C im Vakuum getrocknet. 20 Gewichtsteile der getrockneten Kautschukmasse wurden auf einen Extruder mit 80 Gewichtsteilen Polybutylenterephthalat (Viskositätszahl 145) bei 230-250°C gemischt. Die Eigenschaftswerte der so erhaltenen Formmasse sind aus nachfolgender Tabelle 1 zu entnehmen.

Vergleichsbeispiel 3

Man verwendet eine Dispersion eines Pfropfpolymerisats, das Polybutadien als Pfropfgrundlage mit einem Gelgehalt von 98 % enthält und mit Styrol/Acrylnitril (Gewichtsverhältnis 3:1) gepfropft ist und die Pfropfhülle 40 % des Pfropfkautschuks ausmacht. Der Pfropfkautschuk liegt in der Dispersion zu 50 % in einer Teilchengröße von 0,3 μm vor. Die Dispersion wurde analog Vergleichsbeispiel 2 gefällt und der Kautschuk in schmelzflüssiges Polybutylenterephthalat eingemischt. Die Eigenschaften der erhaltenen Formmasse sind aus nachfolgender Tabelle 1 zu entnehmen.

Tabelle 1

| Beispiel Nr. | 1 | Vergleichsbeispiele | | |
|---|---|---|---|---|
| | | 1 | 2 | 3 |
| Kerbschlagzähigkeit $a_k$ [kJ/m$^2$] | | | | |
| 23⁰ | 32 | 38 | 25,5 | 9,3 |
| -20 | 28 | 20 | 10,4 | 5,0 |
| -40 | 13 | 10 | 7,2 | 3,3 |
| -60 | 7,5 | 5 | 4,2 | - |
| Fließlänge mm | 50 | 42,09 | - | - |

Beispiele 2 bis 5

Man verfährt wie in Beispiel 1 beschrieben, arbeitet jedoch in die Schmelze noch zusätzlich Glasfasern ein. Die Mengen an Polybutylenterephthalat, Kautschuk und Glasfasern sowie die Eigenschaften der so hergestellten Formmasse sind aus Tabelle 2 zu entnehmen.

Tabelle 2

| Beispiele | 2 | 3 | 4 | 5 |
|---|---|---|---|---|
| Polyester Gew.% | 75 | 80 | 60 | 70 |
| Kautschuk Gew.% | 25 | 20 | 40 | 30 |
| Glasfaser Gew.%, bezogen auf Polymermischung | 10 | 20 | 20 | 15 |
| Glührückstand % | 9,7 | 20,3 | 20,5 | 14,2 |
| Reißfestigkeit [N/mm$^2$] | 55,7 | 87,3 | 63,2 | 60,7 |
| E-Modul (Zug) [N/mm$^2$] | 2890 | 5400 | 4170 | 3470 |
| max. Biegespannung [N/mm$^2$] | 74,7 | 116,4 | 76 | 76,95 |
| Schlagzähigkeit [kJ/m$^2$] | | | | |
| 23° | 40,2 | 38,6 | 46 | 44 |
| -40° | 49,4 | 48,8 | 51 | 49,4 |
| -60° | 53,1 | 51,1 | 55 | 53,3 |
| Kerbschlagzähigkeit [kJ/m$^2$] | | | | |
| 23° | 16,8 | 16,1 | 20,7 | 19 |
| -40° | 12,6 | 11 | 8,7 | 15 |
| -60° | 10,8 | 8,7 | 11 | 11,8 |

**Ansprüche**

1. Schlagzähe thermoplastische Polyesterformmassen, dadurch gekennzeichnet, daß sie durch inniges Mischen von

A. 52 bis 99 Gewichtsteile einer Schmelze mindestens eines Polyalkylenterephthalats mit

B. 1 bis 48 Gewichtsteilen mindestens eines durch Emulsionspolymerisation hergestellten kautschukelastischen Pfropfpolymerisats aufgebaut aus

1. 70 bis 90 Gew.% einer Pfropfgrundlage aus kautschukelastischen Polymeren mit einem Gelgehalt von mindestens 80 % und einer Glastemperatur Tg von kleiner -20°C und

2. 10 bis 30 Gew.% einer Pfropfhülle aus mindestens einem Polymeren mit einer Glastemperatur Tg von größer 40°C

in Form einer wäßrigen Dispersion, in der das Pfropfpolymerisat B zu mindestens 80 % in einer Teilchengröße von 0,05 bis 0,15 µm vorliegt, unter gleichzeitigem Entfernen des dabei verdampfenden Wassers hergestellt worden sind.

2. Thermoplastische Polyesterformmassen nach Anspruch 1, dadurch gekennzeichnet, daß die Komponente B aufgebaut ist aus einer Pfropfgrundlage aus mindestens 90 Gew.% Polybutadien und einer Pfropfhülle aus einer Mischung von Styrol/Acrylnitril im Verhältnis 3,5:0,5 bis 2,5:1,5.

3. Thermoplastische Polyesterformmassen nach Anspruch 1, dadurch gekennzeichnet, daß die Komponente B aufgebaut ist aus einer Pfropfgrundlage, die zu mindestens 90 % aus Butadien und die Pfropfhülle aus Methylmethacrylat besteht.

4. Thermoplastische Polyesterformmassen nach Anspruch 1, dadurch gekennzeichnet, daß die Pfropfhülle durch mehrstufige Polymerisation erzeugt wird und die äußere Schale aus Methacrylsäuremethylester besteht.

5. Thermoplastische Formmassen nach den Ansprüchen 1 bis 4, dadurch gekennzeichnet, daß sie auf 100 Gewichtsteile der Mischung der Komponenten A und B 10 bis 100 Gewichtsteile Glasfasern enthalten.